# EUROPÄISCHE PATENTANMELDUNG

(11) **EP 4 838 446 A1**
(43) Veröffentlichungstag der Anmeldung: **11.11.2026**
(21) Anmeldenummer: 25175311.7
(22) Anmeldetag: 09.05.2025
(51) Int. Cl.: G06Q 30/018, G06Q 30/02, G06Q 30/06, G06Q 50/08

(54) **BEWERTUNGSSYSTEM, VERFAHREN ZUM AUSFÜHREN EINES BEWERTUNGSVORGANGS UND MOBILE ERFASSUNGSEINHEIT**

(71) Anmelder: Adam, Peter Markus, 96197 Wonsees (DE)
(72) Erfinder: Adam, Peter Markus, 96197 Wonsees (DE)
(74) Vertreter: TBK

(57) **Zusammenfassung**

Bewertungssystem zur Ermöglichung von Transaktionen mit sperrigen Objekten mit einer Mehrzahl mobiler Erfassungseinheiten, einer zentralen Steuer- und Bewertungseinheit, und einer Datenbank, in der Informationen zu zu bewertenden und zu bewerteten Objekten gespeichert sind und aktualisiert werden, wobei eine mobile Erfassungseinheit einen Bewertungsvorgang zur Bewertung des Zustands eines zu bewertenden Objekts initiieren kann, eine Ein-/Ausgabeeinrichtung umfasst, die eingerichtet ist, Informationen über das zu bewertende Objekt abzufragen und aufzunehmen, eine Steuereinrichtung umfasst, die eingerichtet ist, ein Abfragen und ein Aufnehmen von Informationen mittels der Ein-/Ausgabeeinrichtung in mehreren Schritten nach Vorgabe der zentralen Steuer- und Bewertungseinheit zu steuern, und eine Sende-/Empfangseinrichtung umfasst, die eingerichtet ist, aufgenommene Informationen an die zentrale Steuer- und Bewertungseinheit zu senden, wobei die zentrale Steuer- und Bewertungseinheit eingerichtet ist, abhängig von den empfangenen Informationen und den in der Datenbank gespeicherten Information zu dem zu bewertenden Objekt die weiter abzufragenden Informationen zu bestimmen, eine Vorgabe über die weiter abzufragenden Informationen an die mobile Erfassungseinheit zu senden, nach Empfang aller hierzu erforderlichen Informationen auf Grundlage der abgefragten Informationen eine Bewertung des zu bewertenden Objekts durchzuführen und zu speichern.

## Beschreibung

Die Erfindung betrifft ein Bewertungssystem, eine mobile Erfassungseinheit und ein Verfahren zum Ausführen eines Bewertungsvorgangs.

In der Vergangenheit haben viele Prozesse und Dienstleistungen eine Digitalisierung erlebt. So auch im Bereich des privaten Gebrauchtwarenhandels, für welchen mehrere teilweise auf bestimmte Märkte spezialisierte Systeme ihren Weg in den Alltag finden. Dies erspart Zeit und Ressourcen bei der Abwicklung von Transaktionen. Bei einigen Nischenmärkten, bei welchen der Verkauf der Waren beispielsweise durch manuelle Gutachten begleitet wird, findet die Abwicklung weiterhin nicht-digital statt, so dass diese von obigen Entwicklungen bisher nicht in vollem Maße profitieren konnten.

Aus der Patentschrift JP2002140568 ist beispielsweise ein Verfahren zum digitalen Verhandeln im Bereich der Nutzfahrzeuge bekannt.

Patentschrift JP2007128502A zeigt darüber hinaus ein Gerät zur Dokumentation eines Zustands von Industriemaschinen.

Weiterhin ist von dem Anbieter Intrador die Mobilanwendung "Blue Inspect" bekannt, bei welcher es sich um eine Inspektions-App handelt, mit der Inspektionen an diversen Geräten für Audits oder zu Wiederverkaufszwecke von einem nicht speziell geschulten Endbenutzer durchgeführt werden können.

Es gibt jedoch kein System, welches es beispielsweise einem Unternehmen, welches sich auf den Handel teilweise sperriger Baumaschinen spezialisiert, ermöglicht, das Gutachten und die Transaktion so (teil-) zu automatisieren, dass eine speziell geschulte Person sich nicht zum Aufenthaltsort der jeweiligen Maschine begeben muss. Es gibt also kein System, welches einen aktuellen Zustand einer Maschine, sowie den Zustand all ihrer Anbauteile bestimmt und zeitlich überwacht, um dadurch einen sicheren digitalen Handel mit ebendieser Maschine zu ermöglichen. Auch ist es einem Interessenten bisher nicht einfach möglich, mehrere Angebote ähnlicher Objekte gleichzeitig zu bewerten und in Echtzeit zu vergleichen um eine Entscheidung darüber zu treffen, welche Objekte angekauft werden.

Diese Aufgabe wird durch den Gegenstand der unabhängigen Patentansprüche gelöst. Weitere vorteilhafte Ausgestaltungen können den Unteransprüchen entnommen werden.

Erfindungsgemäß handelt es sich um ein Bewertungssystem mit einer Mehrzahl mobiler Erfassungseinheiten, einer zentralen Steuer- und Bewertungseinheit, und einer Datenbank, in der Informationen zu Objekten gespeichert sind, wobei eine mobile Erfassungseinheit einen Bewertungsvorgang zur Bewertung des Zustands eines zu bewertenden Objekts initiieren kann, eine Ein-/Ausgabeeinrichtung umfasst, die eingerichtet ist, Informationen über das zu bewertende Objekt abzufragen und aufzunehmen, eine Steuereinrichtung umfasst, die eingerichtet ist, ein Abfragen und ein Aufnehmen von Informationen mittels der Ein-/Ausgabeeinrichtung in mehreren Schritten nach Vorgabe der zentralen Steuer- und Bewertungseinheit zu steuern, und eine Sende-/Empfangseinrichtung umfasst, die dazu eingerichtet ist, aufgenommene Informationen an die zentrale Steuer- und Bewertungseinheit zu senden. Die zentrale Steuer- und Bewertungseinheit ist eingerichtet, abhängig von den empfangenen Informationen und/oder den in der Datenbank gespeicherten Information zu dem zu bewertenden Objekt abzufragende Informationen zu bestimmen und eine Vorgabe über abzufragende Informationen an die mobile Erfassungseinheit zu senden, nach Empfang aller hierzu erforderlichen Informationen auf Grundlage der aufgenommenen Informationen eine Bewertung des zu bewertenden Objekts durchzuführen, das Ergebnis dieser Bewertung der mobilen Erfassungseinheit zu übermitteln, und die Bewertung und den Zustand für das Objekt in der Datenbank abzulegen.

In vorteilhafter Ausgestaltung der Erfindung kann die zentrale Steuer- und Bewertungseinheit durch Abfrage der Datenbank das zu bewertende Objekt wiedererkennen und somit erkennen, dass eine Bewertung für das zu bewertende Objekt bereits in der Vergangenheit stattgefunden hat. Denkbar wäre, dass die zentrale Steuer- und Bewertungseinheit diese Information aus der Datenbank zum zu bewertenden Objekt in die aktuelle Bewertung mit einfließen lassen und ein redundantes Abfragen ebendieser vermeiden kann. Dadurch kann weitere Zeitersparnis erreicht werden. In besonders vorteilhafter Ausführung werden Informationen, die zu einem Objekt vor seiner erneuten Bewertung vorlagen, auch nach erfolgter Bewertung weiterhin in der Datenbank geführt. Dadurch führt die Datenbank neben dem aktuellen Zustand und der Bewertung eine Objekt-Historie, so dass die zeitliche Entwicklung des Zustands und der Bewertung des Objekts vorliegt.

In vorteilafter Ausgestaltung bezieht die zentrale Steuer- und Bewertungseinheit im Rahmen eines Bewertungsvorgangs objektübergreifende Informationen aus der Datenbank.

Die objektübergreifende Information kann dabei Information aus zumindest einer der folgenden Klassen beinhalten:
(1) objekttypspezifische Marktfaktoren, unter welche die aktuelle Jahreszeit und/oder Saisonalität, generelle Markttendenzen (Trends), aktuelle und historische Anzahl zu dem zu bewertenden Objekt ähnlicher bereits in der Datenbank festgehaltener Objekte, sowie deren historische preisliche Entwicklung fällt;
(2) objektübergreifende wirtschaftliche Faktoren, unter welche die (regionale) Inflationslage, die (regionale) Kaufkraft privater Abnehmer, relevante staatliche Investitionsabsichten, generelle Wechselkurse und Importkosten für Produkte fallen;
(3) verkaufsortsbezogene Faktoren, unter welche Lagerfähigkeit, Lieferfähigkeit und etwaig anfallende Transportkosten mit Bezugnahme auf voraussichtliche Standorte potentieller Abnehmer fallen;
(4) etwaige gesetzliche & Nachhaltigkeitsaspekte, unter welche Regulierungen und Zertifizierungen fallen.

In besonders vorteilhafter Ausgestaltung des erfindungsgemäßen Bewertungssystems nutzt die zentrale Steuer- und Bewertungseinheit die objektübergreifende Information dazu, um Informationsabfragen einzusparen oder diese auf einige wenige Antwortmöglichkeiten zu beschränken.

Erfindungsgemäß liegt ebenfalls ein Bewertungssystem vor, welches weiterhin über eine Kontrolleinheit verfügt. Diese kann Einfluss auf Bewertungsvorgänge nehmen, indem sie die Steuer- und Bewertungseinheit dazu veranlasst, abzufragende Informationen zu bestimmen oder Bewertungen zu bereits aufgenommenen Informationen zu verändern. Denkbar wäre ein Bewertungssystem, welches dann
in einem ersten Betriebsmodus betrieben werden kann, in welchem vor und/oder nach jeder Informationsabfrage über die zentrale Steuer- und Bewertungseinheit mit der Kontrolleinheit kommuniziert wird;
in einem weiteren Betriebsmodus betrieben werden kann, in welchem die zentrale Steuer- und Bewertungseinheit vor jeder Informationsabfrage und/oder Bewertung eine Entscheidung darüber trifft, ob Kommunikation mit der Kontrolleinheit aufgenommen wird; und/oder
in einem autonomen Betriebsmodus betrieben werden kann, in welchem die zentrale Steuer- und Bewertungseinheit nicht mit der Kontrolleinheit kommuniziert.

Denkbar wäre, dass eine solche Kontrolleinheit eine Schnittstelle zu einer geschulten Person oder zu einer Mehrzahl geschulter Personen darstellt; und wobei die
Kontrolleinheit optional auch die Möglichkeit hat, einen abgeschlossenen Bewertungsvorgang wiederaufzunehmen, indem sie die zentrale Steuer- und Bewertungseinheit dazu veranlasst, weitere abzufragende Informationen zu bestimmen oder bereits aufgenommene Informationen neu zu bewerten.

Ein besonders vorteilhaftes Bewertungssystem liegt vor, wenn zu jedem in der Datenbank verfügbaren Objekt zumindest ein Zugangsschlüssel vorliegt, der es Nutzern, welche über ebendiesen Zugangsschlüssel verfügen, ermöglicht, auf die Bewertung und den erfassten Zustand des Objektes in der Datenbank zuzugreifen oder einen Bewertungsvorgang zu dem Objekt zu initiieren.

Denkbar ist, dass die zentrale Steuer- und Bewertungseinheit im Rahmen des Bewertungsvorgangs eine Abfrage des Zugangsschlüssels vornehmen kann und bei Nichtbereitstellen des Zugangsschlüssels seitens der mobilen Erfassungseinheit der Bewertungsvorgang abgebrochen wird; und/oder
der Zugangsschlüssel nur eine bestimmte Anzahl an Malen für den Zugriff auf die Datenbank oder für das Initiieren eines Bewertungsvorgangs verwendet werden kann, bevor er verfällt, beispielsweise über einen Einmallink.

Denkbar sind ebenfalls Zugangsschlüssel, welche Zugang zu bestimmten Teilmengen der zu einem Objekt in der Datenbank verfügbaren Information ermöglichen. Der Zugangsschlüssel könnten von einer oder mehreren dazu autorisierten Person/-en beispielsweise dazu genutzt werden, um den eingetragenen Zustand eines Objekts einzusehen und/oder Werte, welche den Zustand des Objektes betreffen, zu überschreiben und/oder potentiell über eine mobile Erfassungseinheit eine erneute Bewertung des Objekts zu initiieren.

Weiterhin denkbar ist ein Bewertungssystem nach einem der Ansprüche, welches weiterhin über eine Prüfungseinheit verfügt, die zwei Zustände und Bewertungen eines Objekts vergleicht und bestimmt, ob sich die Zustände signifikant unterscheiden, und auf Basis dieses Vergleichs entweder zu einem negativen oder einem positiven Ergebnis kommt.

Hierbei kann die Signifikanzgrenze für die Unterschiede zwischen zwei Zuständen eines Objekts, welche darüber entscheidet, ob die Prüfungseinheit zu einem positiven oder einem negativen Ergebnis kommt, objektspezifisch oder Objekttyp-spezifisch sein.

Die Datenbank eines erfindungsgemäßen Bewertungssystems kann mit einer Verkaufsplattform verbunden sein, so dass der abgeschlossene Bewertungsvorgang in ein Verkaufsangebot auf der Handelsplattform mündet.

Es liegt weiterhin en Verfahren zum Ausführen eines Bewertungsvorgangs eines zu bewertenden Objekts vor, das mithilfe einer mobilen Erfassungseinheit durchgeführt werden kann. Das Verfahren umfasst Folgendes: Speichern von Informationen zu Objekten in einer Datenbank, Initiieren des Bewertungsvorgangs zur Bewertung des Zustands des zu bewertenden Objekts mittels der mobilen Erfassungseinheit, Abfragen und Aufnehmen von Informationen über das zu bewertende Objekt mittels der mobilen Erfassungseinheit, Senden aufgenommener Informationen über das zu bewertende Objekt an eine zentrale Steuer- und Bewertungseinheit, Bestimmen abzufragender Informationen durch die zentrale Steuer- und Bewertungseinheit abhängig von den an der zentralen Steuer- und Bewertungseinheit empfangenen Informationen und/oder den in der Datenbank gespeicherten Informationen zu dem zu bewertenden Objekt und Senden einer Vorgabe über die weiter abzufragenden Informationen an die mobile Erfassungseinheit, Steuern des Abfragens und des Aufnehmens von Informationen in mehreren Schritten nach der Vorgabe der zentralen Steuer- und Bewertungseinheit, Durchführen einer Bewertung des zu bewertenden Objekts auf der Grundlage der abgefragten Informationen nach Empfangen aller hierfür erforderlichen Informationen an der zentralen Steuer- und Bewertungseinheit, Senden des Ergebnisses dieser Bewertung an die mobile Erfassungseinheit, und Ablegen von Bewertungen und Informationen zu allen bewerteten Objekten in der Datenbank.

Obiges Verfahren kann weiterhin so gestaltet werden, dass das Ablegen in Abhängigkeit einer mittels der mobilen Erfassungseinheit bereitgestellten Information stattfindet, indem
vor einem möglichen Ablegen ein Erfragen an die mobile Erfassungseinheit stattfindet, ob das Ablegen des Ergebnisses eines Bewertungsvorgangs vorgenommen werden soll.

Es ergibt sich damit erfindungsgemäß auch ein Transaktionsverfahren zur Abwicklung einer Transaktion eines Objekts, welches mithilfe eines Bewertungssystems nach Anspruch realisiert wird, und ein erstes Bewerten des Objekts durch das Bewertungssystem, Wechsel eines Besitzers des Objekts, zweites Bewerten des Objekts durch das Bewertungssystem, Prüfung der Ähnlichkeit der zwei Bewertungen durch eine Prüfungseinheit,
und ein Abschließen der Transaktion, wenn das Prüfungsergebnis positiv ausfällt, beinhaltet.

Weiterhin liegt erfindungsgemäß eine mobile Erfassungseinheit für ein erfindungsgemäßes Bewertungssystem vor, die einen Bewertungsvorgang zur Bewertung des Zustands eines zu bewertenden Objekts initiieren kann, eine Ein-/Ausgabeeinrichtung umfasst, die dazu eingerichtet ist, um Informationen über das zu bewertende Objekt abzufragen und aufzunehmen, eine Sende-/Empfangseinrichtung umfasst, die dazu eingerichtet ist, um aufgenommene Informationen an eine zentrale Steuer- und Bewertungseinheit zu senden und eine Vorgabe der zentralen Steuer- und Bewertungseinheit für ein Abfragen und ein Aufnehmen von Informationen zu empfangen, und eine Steuereinrichtung umfasst, die dazu eingerichtet ist, um ein Abfragen und ein Aufnehmen von Informationen mittels der Ein-/Ausgabeeinrichtung in mehreren Schritten nach der Vorgabe der zentralen Steuer- und Bewertungseinheit zu steuern.

In vorteilhafter Ausgestaltung kann die mobile Erfassungseinheit für ein Bewertungssystem einen Link empfangen. Ein Betätigen des Links veranlasst das Bewertungssystem dazu, einen Bewertungsvorgang zu initiieren, und/oder die mobile Erfassungseinheit dazu, einen Erfassungsvorgang durchzuführen, wobei der Erfassungsvorgang folgendes umfasst: Empfangen einer Vorgabe über abzufragende Informationen über die Sende-/Empfangseinrichtung, Abfragen und Aufnehmen der Informationen über ein zu bewertendes Objekt über die Ein-/Ausgabeeinrichtung, Senden aufgenommener Information an eine zentrale Steuer- und Bewertungseinheit über die Sende-/Empfangseinrichtung.

Erfindungsgemäß liebt ebenfalls ein Programm für eine mobile Erfassungseinheit vor, welches die mobile Erfassungseinheit dazu befähigt, einen Erfassungsvorgang wie oben beschrieben durchzuführen, und welches die mobile Erfassungseinheit weiterhin dazu befähigt, als Teil eines erfindungsgemäßen Bewertungssystems einen Bewertungsvorgang zur Bewertung des Zustands eines zu bewertenden Objekts zu initiieren.

Um bestmöglich darzustellen, wie die oben beschriebenen Ausführungsformen umgesetzt werden, und um weitere Vorteile und Merkmale der Offenbarung zu definieren, folgt nachstehend eine detailliertere Beschreibung, die durch die beigefügten Figuren veranschaulicht wird. Diese Zeichnungen geben nur exemplarische Ausführungsformen der Erfindung wieder und sind daher nicht als in ihrem Umfang einschränkend aufzufassen; die Beispiele werden anhand der beigefügten Zeichnungen mit zusätzlichen Angaben und Details beschrieben und erläutert:
Fig. 1 zeigt ein Funktionsdiagramm zur Beschreibung eines beispielhaften Bewertungssystems
Fig.2 zeigt ein weiteres Funktionsdiagramm gemäß eines weiteren Ausführungsbeispiels des Bewertungssystems
Fig. 3 zeigt ein Flussdiagramm zur Beschreibung eines beispielhaften Verfahrens zur Ausführung des Bewertungsvorgangs
Fig. 4a und 4b zeigen ein weiteres Bewertungssystem und eine Transaktion eines Objekts
Fig. 5 zeigt ein Flussdiagramm eines beispielhaften Transaktionsverfahrens eines Objekts unter Nutzung des Bewertungssystems

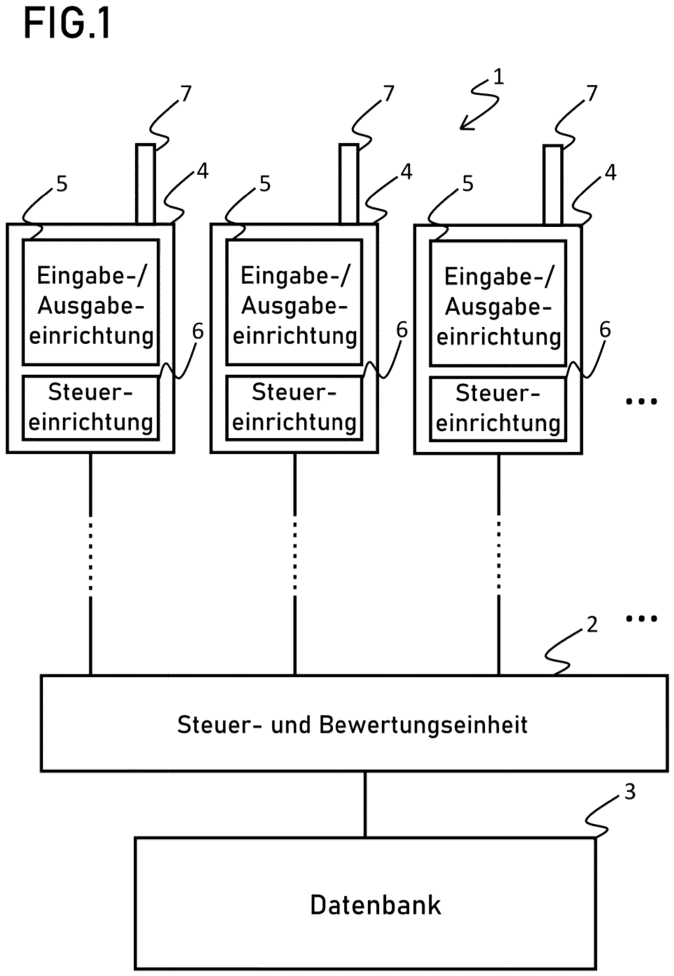

Fig. 1 zeigt ein Bewertungssystem 1, bestehend aus einer Steuer- und Bewertungseinheit 2, welche Zugriff auf eine Datenbank 3 hat. Die Steuer- und Bewertungseinheit 2 kommuniziert weiterhin mit einer Mehrzahl an mobilen Erfassungseinheiten 4. Drei mobile Erfassungseinheiten sind in Fig.1 bildlich dargestellt, aber eine beliebige Anzahl ist prinzipiell denkbar. Eine mobile Erfassungseinheit 4 kann beispielsweise ein handelsübliches Smartphone oder Tablet sein.

Jede der mobilen Erfassungseinheiten 4 verfügt zumindest über eine Ein- und Ausgabeeinrichtung 5, eine Steuereinrichtung 6 und eine Sende-/Empfangseinrichtung 7. Die Ein-/Ausgabeeinrichtung 5 ist dazu eingerichtet, um Informationen über ein zu bewertendes Objekt abzufragen und aufzunehmen. Die Information kann beispielsweise in Text- und/oder (Bewegt-)Bildform sein, andere Formen sind jedoch ebenfalls möglich.

Die Steuereinrichtung 6 dient dazu, ein Abfragen und ein Aufnehmen von Informationen mittels der Ein-/Ausgabeeinrichtung 5 in mehreren Schritten nach Vorgabe der zentralen Steuer- und Bewertungseinheit 2 zu steuern.

Die Sende-/Empfangseinrichtung 7 ist dazu eingerichtet, aufgenommene Informationen an die zentrale Steuer- und Bewertungseinheit 2 zu senden und potentiell weitere Befehle der zentralen Steuer- und Bewertungseinheit 2 zu empfangen. Der Signalaustausch könnte beispielsweise über das Internet erfolgen.

Prinzipiell kann jede der mobilen Erfassungseinheiten 4 einen Bewertungsvorgang zu einem zu bewertenden Objekt initiieren.

Die zentrale Steuer- und Bewertungseinheit 2 ist dazu eingerichtet, abhängig von den von einer der mobilen Erfassungseinheiten 4 gesendeten Informationen weitere Informationen bei der entsprechenden Erfassungseinheit 4 anzufragen. Die Bewertungseinheit 2 bestimmt dabei die abzufragenden Informationen basierend auf den bisher erhaltenen Informationen zum zu bewertenden Objekt sowohl während des aktuellen Bewertungsvorgangs, als auch optional basierend auf bereits in der Vergangenheit stattgefundenen Bewertungsvorgängen zum zu bewertenden Objekt. Hierfür kommuniziert die zentrale Steuer- und Bewertungseinheit 2 während des Bewertungsvorgangs mit der Datenbank 3. Stelle man sich beispielsweise als zu bewertendes Objekt eine Baumaschine vor, welche bereits in der Vergangenheit bewertet wurde und somit der Datenbank bereits bekannt ist, so lässt sich bei einem erneuten Bewertungsvorgang eine Zeitersparnis erreichen, wenn zum Beispiel Produktionsjahr oder Motorleistung kein weiteres Mal abgefragt werden.

Nachdem der zentralen Steuer- und Bewertungseinheit 2 alle nötigen Informationen zum Zustand des zu bewertenden Objekts vorliegen, um eine Bewertung des zu bewertenden Objekts durchzuführen, führt sie eine Bewertung durch und sendet das Ergebnis dieser Bewertung an die mobile Erfassungseinheit 4, mit welcher der Bewertungsvorgang initiiert wurde. Gleichzeitig wird der aufgenommene Zustand in der Datenbank 3 abgelegt. Hierbei kann der Zustand und die Bewertung so abgelegt werden, dass eine möglicherweise frühere Bewertung des Objekts nicht überschrieben wird und somit ein zeitlicher Verlauf des Zustandes und der Bewertung des Objekts aus der Datenbank auslesbar ist.

In einer alternativen Ausführung ist es weiterhin möglich, dass die Bewertung des Objekts vorerst ausschließlich an die mobile Erfassungseinheit 4 gesendet wird und erst über die Ein- & Ausgabeeinrichtung 5 eine Bestätigung eingefordert wird. Erst bei erfolgreicher Bestätigung erfolgt die Speicherung beziehungsweise Aktualisierung der Bewertung und des Zustandes des zu bewerteten Objekts in der Datenbank. Bei Ablehnung findet kein Ablegen in der Datenbank 3 statt. Dies ermöglicht einem potentiellen Endbenutzer des Bewertungssystems 1 eine diskrete Bewertung seines Objekts.

In einer weiteren vorteilhaften Ausführungsform hat eine oder mehrere (Online-)Verkaufsplattformen Zugriff auf die Datenbank 3, so dass eine durch einen Endbenutzer angenommene Bewertung ein Verkaufsangebot auf Basis der erfolgten Bewertung seines Objekts ermöglicht. Alternativ kann das Bewertungssystem 1 von einem potentiellen Endbenutzer dazu benutzt werden, die Zustände und Bewertungen seiner Objekte stets aktuell zu halten, auch wenn kein Verkauf ebendieser beabsichtigt wird.

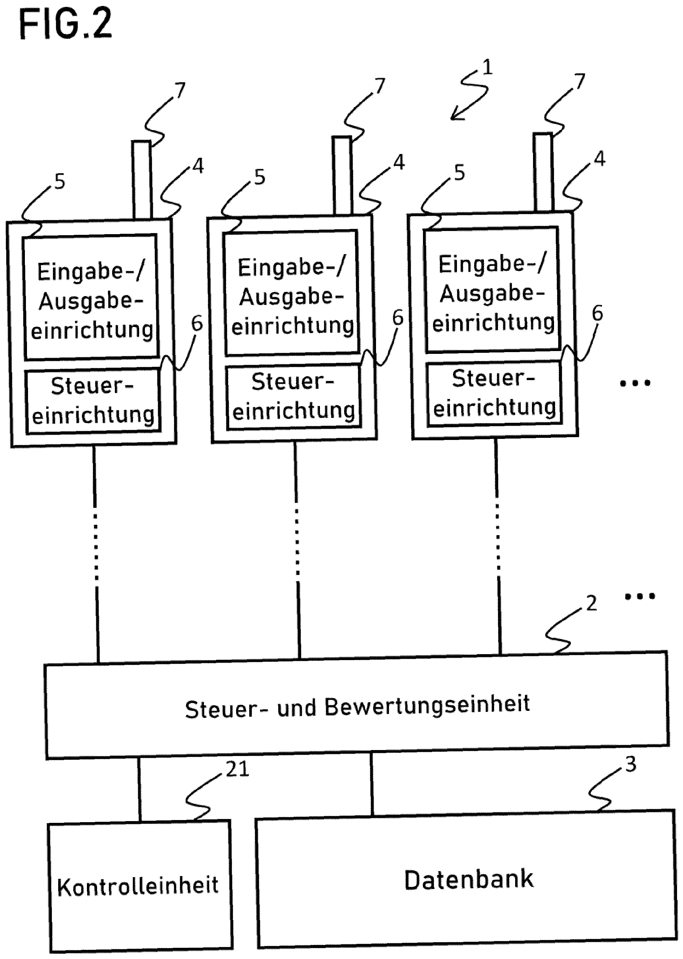

Ein weiteres Ausführungsbeispiel ist in Fig. 2 dargestellt, welches über eine Kontrolleinheit 21 verfügt. Diese Einheit überwacht die Steuer- und Bewertungseinheit 2 und kann beispielsweise in Form einer Schnittstelle zu einer geschulten Person oder einer Vielzahl geschulter Personen realisiert werden.

Über die Kontrolleinheit 21 kann gemäß dem vorliegenden Ausführungsbeispiel Einfluss auf Bewertungsprozesse genommen werden, so dass beispielsweise abzufragende Informationen zu zu bewertenden Objekten ermittelt werden können oder Bewertungen einzelner aufgenommener Informationen überschrieben werden können.

Das Bewertungssystem kann darüber hinaus über Betriebsmodi verfügen, welche über die Einbeziehung der Kontrolleinheit auf laufende Bewertungsverfahren bestimmen. Beispielsweise kann ein Bewertungssystem 1 nach Fig. 2 in einem ersten Betriebsmodus (1) vor und/oder nach jeder Informationsabfrage über die zentrale Steuer- und Bewertungseinheit 2 mit der Kontrolleinheit 21 kommunizieren. In einem möglichen weiteren Betriebsmodus (2) trifft die zentrale Steuer- und Bewertungseinheit 2 vor jeder Informationsabfrage und/oder Bewertung eine Entscheidung darüber, ob Kommunikation mit der Kontrolleinheit 21 aufgenommen wird. Auch ein autonomer Betriebsmodus (3) ist denkbar, in welchem die zentrale Steuer- und Bewertungseinheit 2 per Einstellung nicht mit der Kontrolleinheit 21 kommuniziert. Ein gesamter Bewertungsvorgang muss dabei nicht zwangsweise durchgängig in einem Betriebsmodus erfolgen, sondern die zentrale Steuer- und Bewertungseinheit 2 kann beispielsweise im Betriebsmodus (3) die Entscheidung treffen, bestimmte Informationsabfragen zeitlich aufzuschieben, bis ein Betriebsmodus eingestellt wird, in welchem die Kommunikation mit der Kontrolleinheit förderlich wäre [(1) oder (2)].

Die Kontrolleinheit 21 kann darüber hinaus die Möglichkeit haben, vergangene Bewertungen wieder aufzugreifen, indem sie die zentrale Steuer- und Bewertungseinheit dazu veranlasst, weitere abzufragende Informationen zu bestimmen, welche über eine mobile Erfassungseinheit 4 zu erfassen sind. Bei diesen Informationen kann es sich um neue Informationen oder in der Vergangenheit bereits erhobene Informationen handeln, dessen vorherige Aufnahme nicht zufriedenstellend ist. Dadurch kann eine endgültige Bewertung kontrolliert und im Nachhinein verbessert werden.

Der Vorteil eines solchen Systems gegenüber dem Stand der Technik ergibt sich aus der Feststellung, dass eine Kontrolleinheit 21 zeitgleich Einfluss auf mehrere (auch in der Vergangenheit liegende) Bewertungsvorgänge nehmen kann. Wird die Kontrolleinheit 21, wie vorstehend erwähnt, durch eine Schnittstelle zu einer oder mehreren geschulten Personen realisiert, so kann gegenüber dem Stand der Technik die Effizienz an Bewertungen und dadurch potentiellen Transaktionen für ein beispielhaftes Unternehmen im Baumaschinenhandel gesteigert werden. Insbesondere, wenn etwaige Informationen zu einer vorliegenden Bewertung in nicht zufriedenstellender Verfassung vorliegen, ist die Zeitersparnis einer Überarbeitung der Bewertung gegenüber einem Auftreten einer geschulten Person vor Ort immens.

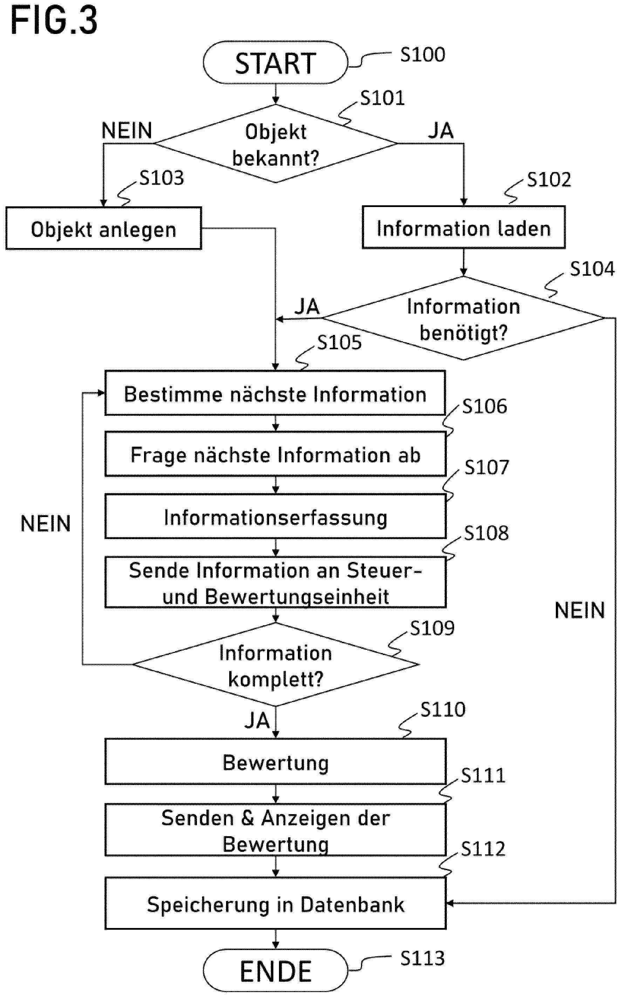

Fig. 3 zeigt eine Ausführungsform des Bewertungsvorgangs gemäß der Erfindung. Im ersten Schritt S100 wird ein Bewertungsvorgang durch eine mobile Erfassungseinheit 4 initiiert.

Im optionalen Schritt S101 wird bestimmt, ob das zu dem zu bewertenden Objekt bereits eine ehemalige Bewertung vorliegt. Beispielsweise wäre dies über objektspezifische Zugangsschlüssel möglich, über dessen Eingabe das zu bewertende Objekt klar in der Datenbank gefunden werden kann. Als ein solcher Zugangsschlüssel könnte die Kombination aus Objektart und Produktnummer dienen. Alternativ wäre denkbar, dass ein Bewertungsvorgang durch bestimmte Endbenutzer, welche durch bestimmte Benutzerkenndaten gekennzeichnet sind, initiiert wurde die ihm zugeordneten Objekte der Datenbank 3 bekannt sind. Das zu bewertende Objekt könnte somit vom Endbenutzer aus einer Liste ausgewählt werden, falls es sich nicht um ein der Datenbank 3 unbekanntes (neues) Objekt handelt.

Handelt es sich um ein neues Objekt, so wird dieses in Schritt S103 angelegt und im darauffolgenden Schritt S105 dann die nächste zu bestimmende Information zum Objekt bestimmt.

Ist das Objekt bereits bekannt, so werden alle vorliegenden Informationen in Schritt S102 geladen. Daraufhin wird optional in Schritt S104 bestimmt, inwiefern neue Informationen zum Objekt benötigt werden.

Es ist denkbar, dass beispielsweise ein nicht zur Bewertung eines Objekts zugelassener Endbenutzer eine Bewertung initiiert hat oder die letzte Bewertung des Objekts nur kurz vorher stattgefunden hat und somit eine Neubewertung nicht sinnvoll erscheint. In diesem Fall findet keine Neubewertung des Objekts statt. Der Vorgang schreitet zu Schritt S112, wo der Zugriff in der Datenbank 3 festgehalten wird und der Vorgang wird anschließend in Schritt S113 beendet.

Im Regelfall ist weitere Information jedoch benötigt und der Vorgang schreitet zu S105 vor. Beispielsweise kann in diesem Schritt der Bestimmung der nächsten abzufragenden Information eine Kontrolleinheit Einfluss auf die zentrale Steuer- und Bewertungseinheit nehmen. Nachdem die nächste zu bewertende Information vom zentralen Steuer- und Bewertungssystem 2 bestimmt wurde, wird diese in S106 an die mobile Erfassungseinheit 4 kommuniziert.

In S107 wird die erfragte Information durch die mobile Erfassungseinheit erfasst. Die Information kann beispielsweise eine Nummer oder ein (Bewegt-)bild des zu bewertenden Objekts sein. Im Anschluss wird diese in S108 an die zentrale Steuer- und Bewertungseinheit 2 weitergeleitet.

Die Steuer- und Bewertungseinheit prüft nun in S109 mithilfe der neu empfangenen Information und der Informationen, die aus vorherigen Abfragen und der Datenbank bekannt sind, inwiefern noch weitere Informationen benötigt sind. Auch hier könnte die Auswertung der erhaltenen Information und die Entscheidung durch eine Kontrolleinheit unterstützt werden.

Sind noch weitere Informationen zum Zustand des Objekts zu erfassen, so kehrt der Prozess zu Schritt S105 zurück und durchläuft eine weitere Iteration der Informationserfassung S106-S108.

Ist die Information in S109 jedoch bereits vollständig, so schreitet der Vorgang zu S110 und die zentrale Steuer- und Bewertungseinheit führt eine Bewertung anhand der erhaltenen Informationen durch.

Das Ergebnis der Bewertung wird in S111 anschließend an die mobile Erfassungseinheit gesendet und dem Endbenutzer angezeigt. Optional könnte der Benutzer die Option haben, dem Festhalten des Zustandes des Objekts sowie der Bewertung in der Datenbank 3 zu widersprechen.

In der dargestellten Ausführungsform wird in S112 der bestimmte Zustand und die daraus resultierende Bewertung des Objekts aus S110 in der Datenbank 3 gespeichert. In vorteilhafter Ausführungsform werden mögliche vorherige Zustände und Bewertungen dabei nicht automatisch gelöscht.

Damit ist der Bewertungsvorgang in S113 abgeschlossen. Falls das System Teil einer digitalen Verkaufsplattform ist, so ist denkbar, dass das Festhalten der Bewertung in der Datenbank 3 ein gleichzeitiges Verkaufsangebot des bewerteten Objekts darstellt.

Alternativ könnte eine Handelsplattform, welche über eine Anbindung zu einem erfindungsgemäßen Bewertungssystem 1 verfügt, als Ergebnis eines Bewertungsvorgangs ein Kaufangebot unterbreiten, welches über die mobile Erfassungseinheit angenommen (Deal WON) oder abgelehnt (Deal LOST) werden kann.

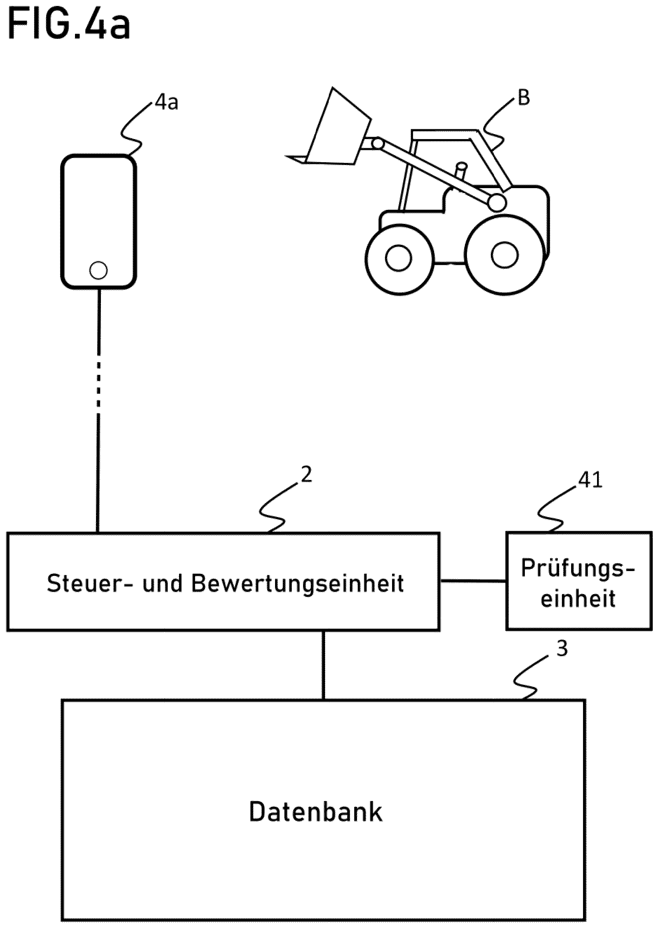

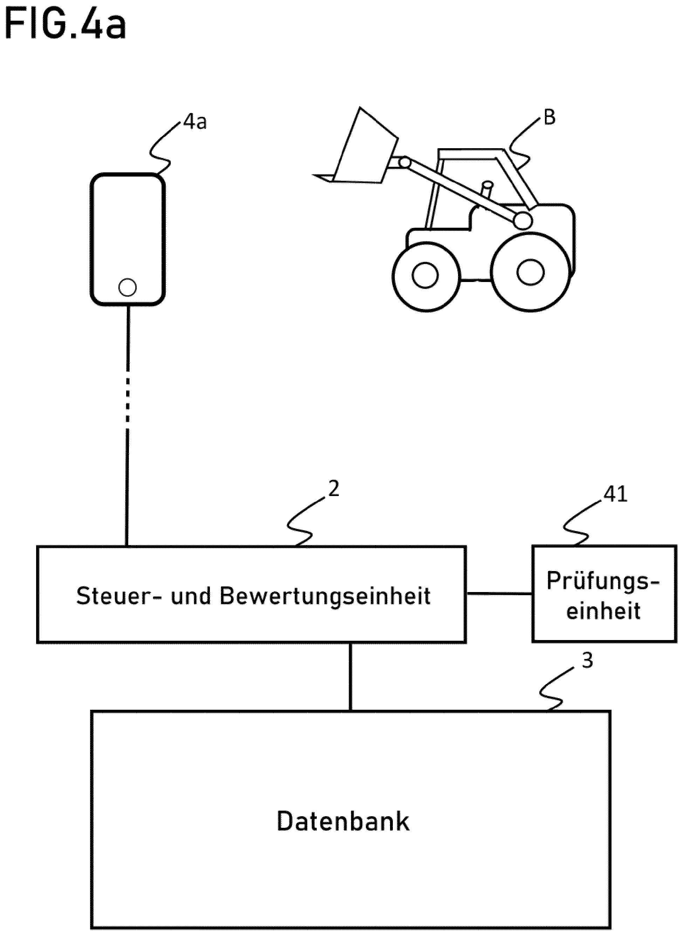

Eine solche Einbettung des Bewertungssystems 1 wird durch eine besonders vorteilhafte Ausführungsform begünstigt, in welcher die zentrale Steuer- und Bewertungseinheit 2 weiterhin mit einer Prüfungseinheit 41 kommuniziert, wie in Fig. 4a dargestellt. Die Prüfungseinheit 41 kann zwei Objektzustände und Bewertungen darauf vergleichen, ob sie ähnlich sind. Der Vorteil der Prüfungseinheit wird durch die schematische Darstellung eines Transaktionsprozesses in den Figuren 4a und 4b deutlich.

In Fig. 4a findet ein Bewertungsvorgang für ein beispielhaftes physisches Objekt (B) statt, welcher nach Fig. 3 ablauft und erfindungsgemäß mit einer mobilen Erfassungseinheit (4a) durchgeführt wird. Im dargestellten Verwendungsbeispiel des Bewertungssystems 1 wird auf Basis der Bewertung des Objekts (B) beispielsweise ein Kauf des Objekts (B) abgefertigt. Beispielsweise dadurch, dass die Datenbank 3 über eine Anbindung zu einer digitalen Verkaufsplattform verfügt und eine erfolgte Bewertung eines Objekts in ein zeitgleiches Verkaufsangebot mündet. Hierbei wäre das Verkaufsangebot an den aus dem Bewertungsvorgang festgehaltenen Zustand gebunden, welcher beispielsweise in Form eines Datensatzes vorliegt.

Alternativ könnte eine Handelsplattform, welche über eine Anbindung zu einem erfindungsgemäßen Bewertungssystem 1 verfügt, als Ergebnis eines Bewertungsvorgangs ein Kaufangebot unterbreiten, welches über die mobile Erfassungseinheit angenommen (Deal WON) oder abgelehnt (Deal LOST) werden kann. Bei Annahme wäre auch hier das Kaufangebot an einen Zustand gebunden, welcher beispielsweise in Form eines Datensatzes #1 vorliegt. Ein solcher Datensatz könnte beispielsweise den Hersteller des Objekts, den Objekttyp, das Baujahr, Seriennummer, den Zeitpunkt des Bewertungsvorgangs, sowie die Geokoordinaten der mobilen Erfassungseinheit zum Zeitpunkt der Bewertung festhalten.

Nach oder kurz vor dem durch den Kauf bedingten Besitzerwechsel des Objekts (B), zum Beispiel nach der Anlieferung oder bei der Abholung des Objekts (B) kann ein weiterer Endbenutzer mit einer weiteren mobilen Erfassungseinheit (4b) einen Prüfungsvorgang initiieren, wie in Fig. 4b dargestellt. Dies ermöglicht beispielsweise einem Käufer des Objekts (B) zu überprüfen, inwiefern das erhaltene Objekt tatsächlich dem gekauften entspricht oder ob sich der Zustand in der Zwischenzeit signifikant geändert hat (d.h. ob der aktuelle Zustand dem des im ersten Datensatz festgehaltenen entspricht).

Denkbar wäre auch eine Ausführung, in welcher der weitere Endbenutzer den ersten Datensatz mit noch nicht erhobenen oder in die Bewertung miteingeflossenen Informationen erweitern kann, um einen aktualisierten zweiten Datensatz zu erhalten. Eine solche Ausführungsform kann für einen Fall vorteilhaft sein, in welchem der weitere Endbenutzer ein Zwischenhändler des Objekts ist, und dieses seinerseits für den weiteren Handel bereitstellen möchte.

Beim Prüfungsvorgang wird durch einen dazu berechtigten Endbenutzer wie beispielsweise dem Käufer, welcher der Datenbank 3 als solcher bekannt ist, ein erneuter Bewertungsvorgang nach den Schritten S100-S110 durchgeführt. Im Anschluss wird die Information aus der erneuten Bewertung und der vor der Transaktion stattgefundenen Bewertung durch die Prüfungseinheit 41 auf Unterschiede geprüft. Hierzu kann die Prüfungseinheit beispielsweise (Bewegt-)Bildinformation aus der ersten und der zweiten Bewertung nutzen. Denkbar wäre auch der Abgleich zweier aus den jeweiligen Bewertungsvorgängen erstellter Datensätze oder Teildatensätze.

Optional kann die Bewertungseinheit hierbei zu einem binären Ergebnis, also entweder positiven oder negativen Ergebnis kommen. Sind die aus den Bewertungsvorgängen hervorgegangenen Bewertungen nach der Prüfungseinheit 41 ausreichend ähnlich, so kommt die Prüfungseinheit 41 zu einem positiven Ergebnis, welches an die Steuer- und Bewertungseinheit 2 und von dort an den Endnutzer gesendet wird. Sind die Unterschiede der Ergebnisse der zwei Bewertungsvorgänge eines Objekts jedoch über einem bestimmten Stellenwert, so kann die Prüfungseinheit zu einem negativen Ergebnis kommen. Im vorliegenden Anwendungsbeispiel würde dies bedeuten, dass der Zustand des gekauften Objekts und der Zustand des erhaltenen Objekts sich signifikant unterscheiden.

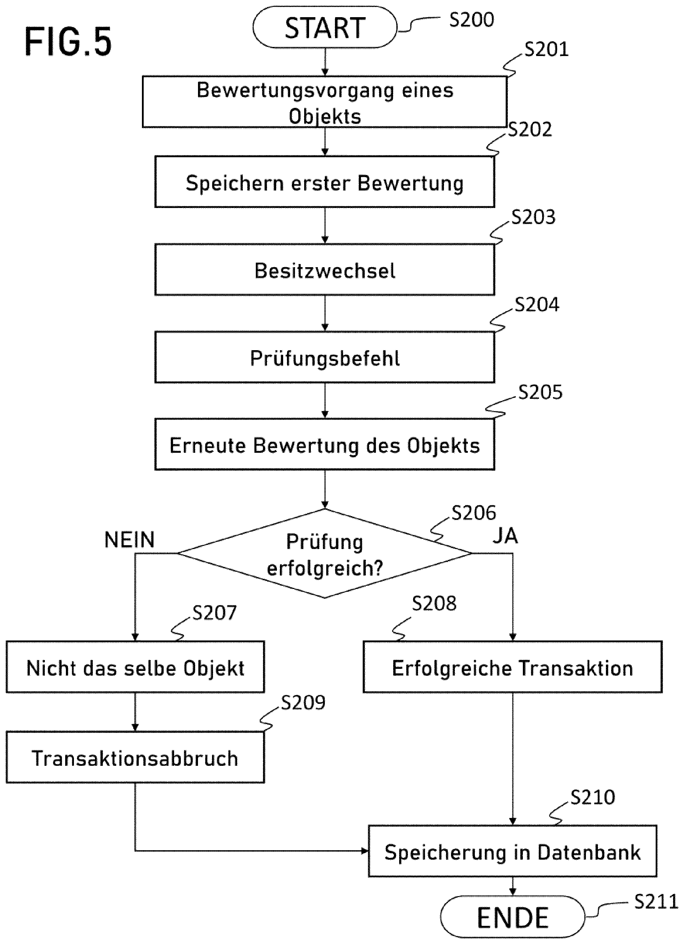

Somit ist mithilfe des Bewertungssystems 1b ein digitales Transaktionsverfahren für Objekte möglich, welches in Fig. 5 ausführlich dargestellt ist.

Die Schritte S200-S202 stimmen im Wesentlichen mit dem bekannten Bewertungsvorgang aus Fig. 3 überein. Es wird also ein zu bewertendes Objekt bewertet und sein Zustand sowie die entsprechende Bewertung in der Datenbank festgehalten. Dies kann in Form eines ersten Datensatzes erfolgen.

In Schritt S203 findet ein Besitzerwechsel auf Basis dieser Bewertung statt. Der neue Besitzer des Objekts kann beispielsweise ein Käufer oder eine von einem Käufer zu einer Dienstleistung beauftragte dritte Person sein, welche somit die Berechtigung hat, einen Prüfungsvorgang gemäß der Erfindung zu dem Objekt zu initiieren.

In S204 wird die Prüfung initiiert.

Die Prüfung wird in S205 durch einen erneuten Bewertungsvorgang des zu bewertenden Objekts, welches den Schritten S100-S110 entspricht, eingeleitet. Das Ergebnis dieser Bewertung könnte in Form eines zweiten Datensatzes festgehalten werden.

Nach Vorliegen der zweiten Bewertung des Objekts wird in Schritt S206 von der Prüfungseinheit eine Prüfung durchgeführt, in welcher die erfassten Zustände des ersten Bewertungsverfahrens und des zweiten Bewertungsverfahrens miteinander verglichen werden. Die Prüfung kann dabei auf Informationsverarbeitung diverser Informationen, wie beispielsweise Bildinformationen basieren, und auch objekt-, preis- und nutzerspezifisch sein.

Fällt die Prüfung erfolgreich aus, so gilt die Transaktion des Objekts als erfolgreich und eine entsprechende Information wird in S208 an die Steuer- und Bewertungseinheit und an den Endbenutzer weitergeleitet. Das Ergebnis der Prüfung wird daraufhin in der Datenbank in S210 festgehalten und die Transaktion somit in S211 erfolgreich beendet.

Es kann jedoch auch ein negatives Prüfungsergebnis erfolgen, sodass in S207 die zentrale Steuer- und Bewertungseinheit die Information erhält, dass sich die Zustände entweder signifikant unterscheiden oder es sich beim zweiten Bewertungsvorgang nicht um das gleiche Objekt wie beim ersten Bewertungsvorgang, handelt.

Im vorliegenden Ausführungsbeispiel für ein Transaktionsverfahren wird im Anschluss an ein negatives Prüfungsergebnis in S209 die Transaktion abgebrochen. Je nach Ausführungsform kann hierbei jedoch ein Verfahren zur Problemlösung folgen.

Das Ergebnis der Prüfung kann auch im Falle eines negativen Ergebnisses und des daraus folgenden Transaktionsabbruchs in S210 in der Datenbank 3 festgehalten werden.

Denkbar wäre, dass eine zentrale Steuer- und Bewertungseinheit 2 eines erfindungsgemäßen Bewertungssystems jegliche in der Datenbank 3 verfügbaren Informationen im Rahmen eines Bewertungsvorgangs nutzt, also auch objektübergreifende Informationen bezieht. Somit kann eine präzisere Bewertung erfolgen. Solche Informationen können inkludieren:
(1) objekttypspezifische Marktfaktoren, welche Rückschlüsse auf aktuelle und prognostizierte Nachfrage für das zu bewertende Objekt offenbaren wie u.a. die aktuelle Jahreszeit und/oder Saisonalität, generelle Markttendenzen (Trends), aktuelle und historische Anzahl ähnlicher bereits in der Datenbank festgehaltener Objekte, sowie deren historische preisliche Entwicklung;
(2) objektübergreifende wirtschaftliche Faktoren, welche die allgemeine Marktsituation auf das entsprechende Objekt beziehen, wie beispielsweise die (regionale) Inflationslage, die Aufschluss über eine (regionale) Kaufkraft privater Abnehmer, sowie für den Handel mit z.B. Baumaschinen relevante staatliche Investitionsabsichten, sowie generelle Wechselkurse und Importkosten für Produkte;
(3) Verkaufsortsbezogene Faktoren, wie die für den Handel mit sperrigen Industriemaschinen relevante Lagerfähigkeit, Lieferfähigkeit und etwaig anfallende Transportkosten, insbesondere mit Bezugnahme auf voraussichtliche Standorte potentieller Abnehmer;
(4) etwaige gesetzliche und Nachhaltigkeitsaspekte, wie etwaige Regulierungen und Zertifizierungen, welche Einsatzmöglichkeiten und/oder Transporte sperriger Industriemaschinen einschränken können.

Insbesondere im Vergleich zu gängigen Bewertungsmethoden über vor-Ort stattfindende Gutachten können durch eine solche Ausführung eines Bewertungssystems ein erheblicher Ausbau der Qualität einer Bewertung erreicht werden.

Durch die Verwendung der vollständigen vorliegenden Informationen zu diversen Objekten können Informationsabfragen teilweise eingespart werden oder Antwortmöglichkeiten eingegrenzt werden. Denkbar wäre dies beispielsweise bei einem Nutzfahrzeug, bei welchem die Abfrage der Leistung von einer Eingabe einer beliebigen Zahl auf die Auswahl zwischen einigen wenigen Antwortmöglichkeiten vereinfacht wird. Somit kann weitere Zeitersparnis erreicht werden.

Ein erfindungsgemäßes Bewertungssystem kann gleichzeitig eine Vielzahl an Bewertungen durchführen, welche über eine Vielzahl mobiler Erfassungseinheiten initiiert wurden. Somit können auch gleichzeitig mehrere Bewertungsvorgänge zu Objekten des gleichen oder ähnlichen Typs durchgeführt werden.

Eine vorteilhafte Ausführung eines erfindungsgemäßen Bewertungssystems kann zusätzlich zu den oben aufgeführten Informationen, welche von Initialisierung einer Bewertung in der Datenbank vorlagen, auch in Echtzeit aufgenommene Information aus beispielsweise parallel verlaufenden Bewertungen in die Bewertung eines zu bewertenden Objekts mit einfließen lassen. Somit kann ein dermaßen implementiertes Bewertungssystem das gleichzeitige Bewerten von zwei oder mehr Objekten des gleichen oder ähnlichen Typs an unterschiedlichen Orten realisieren.

Im Falle, dass beispielsweise eine Handelsplattform ein solches Bewertungssystem zum Ankauf von beispielsweise sperrigen Baumaschinen verwendet, und Bedarf an einer bestimmten Anzahl entsprechender Objekte aufweist, kann das Bewertungssystem eine Entscheidung darüber treffen, welches oder welche Objekte von den zwei oder mehr zu bewertenden Objekten angekauft werden. Somit erlaubt ein solches Bewertungssystem, das Bewerten mehrerer Angebote ähnlicher Objekte gleichzeitig zu koordinieren und die Angebote in Echtzeit zu vergleichen, um eine Entscheidung darüber zu treffen, welche Objekte angekauft werden, auch wenn diese Objekte geographisch weit voneinander entfernt sind.

Zu jedem in der Datenbank 3 verfügbaren Objekt kann es vorteilhaft sein, Zugangsschlüssel zu definieren, welche darüber verfügenden Erfassungseinheiten 4 das Einsehen und oder Überschreiben der Daten ermöglichen. Beispielsweise könnten ausschließlich Administratoren des Bewertungssystems oder Besitzer eines Objekts Informationen bezüglich ebendieses Objektes einsehen. Denkbare Zugangsschlüssel könnten über persönliche Identifikationsmerkmale definiert werden, wie Fingerabdruck oder Gesichtserkennung.

Ebenfalls könnte durch entsprechende Zugangsschlüssel das Recht auf ein Initiieren einer Neubewertung oder Überprüfung eines Objekts reguliert werden. Beispielsweise könnte die Datenbank 3 neben den Zuständen den/die aktuellen Besitzer eines Objektes speichern, so dass nur entsprechende mobile Erfassungseinheiten auch über einen Zugangsschlüssel verfügen, um ein Bewertungsvorgang zu starten. In einer besonders vorteilhaften Ausführung können solche Zugangsschlüssel nur eine Initiation oder eine begrenzte Anzahl an Initiationen von Bewertungsvorgängen ermöglichen. Dies stellt sich für den Fall als vorteilhaft heraus, in welchem beispielsweise ein Besitzer des Objekts oder ein Administrator einer über eine Anbindung an ein erfindungsgemäßes Bewertungssystem verfügenden Handelsplattform daran interessiert ist, dass eine dritte Person einmalig einen Bewertungsvorgang durchführt. Hierzu könnte die Erstellung entsprechender Zugangsschlüssel, beispielsweise in Form von "Einmallinks", über mobile Erfassungseinheiten angefragt werden, und über einen drahtlosen Kommunikationsweg wie beispielsweise über das Internet weiteren mobilen Erfassungseinheiten zur Verfügung gestellt werden. Nach Verwendung eines solchen "Einmallinks" wird der entsprechende Zugangsschlüssel wieder entfernt, so dass über den Link kein Zugriff mehr auf die Datenbank möglich ist.

Beim Initiieren eines Bewertungsvorgangs kann die zentrale Steuer- und Bewertungseinheit eine Abfrage des Zugangsschlüssels vornehmen und somit auch sicherstellen, dass nur autorisierte Endbenutzer eine Bewertung gewisser Objekte vornehmen können. Kann von der mobilen Erfassungseinheit kein entsprechender Zugangsschlüssel bereitgestellt werden, so kann der Bewertungsvorgang abgebrochen werden.

Die vorliegende Erfindung kann weiterhin als mobile Erfassungseinheit für ein Bewertungssystem vorliegen, welche einen Bewertungsvorgang zur Bewertung des Zustands eines zu bewertenden Objekts initiieren kann, eine Ein-/Ausgabeeinrichtung umfasst, die dazu eingerichtet ist, um Informationen über das zu bewertende Objekt abzufragen und aufzunehmen, eine Sende-/Empfangseinrichtung umfasst, die dazu eingerichtet ist, um aufgenommene Informationen an eine zentrale Steuer- und Bewertungseinheit zu senden und eine Vorgabe der zentralen Steuer- und Bewertungseinheit für ein Abfragen und ein Aufnehmen von Informationen zu empfangen, und eine Steuereinrichtung umfasst, die dazu eingerichtet ist, um ein Abfragen und ein Aufnehmen von Informationen mittels der Ein-/Ausgabeeinrichtung in mehreren Schritten nach der Vorgabe der zentralen Steuer- und Bewertungseinheit zu steuern.

Weiterhin ist denkbar, dass die mobile Erfassungseinheit einen Link empfangen kann, und ein Betätigen des Links das Bewertungssystem dazu veranlasst, einen Bewertungsvorgang zu initiieren, und/oder die mobile Erfassungseinheit dazu veranlasst, einen Erfassungsvorgang durchzuführen, wobei der Erfassungsvorgang umfasst:
Empfangen einer Vorgabe über abzufragende Informationen über die Sende-/Empfangseinrichtung, Abfragen und Aufnehmen der Informationen über ein zu bewertendes Objekt über die Ein-/Ausgabeeinrichtung, und Senden aufgenommener Information an eine zentrale Steuer- und Bewertungseinheit über die Sende-/Empfangseinrichtung.

Die Erfindung kann ebenfalls in Form eines Computerprogramms für eine mobile Erfassungseinheit vorliegen, welches die mobile Erfassungseinheit dazu befähigt, einen Erfassungsvorgang durchzuführen, wobei der Erfassungsvorgang folgendes umfasst:
Empfangen einer Vorgabe über abzufragende Informationen über die Sende-/Empfangseinrichtung, Abfragen und Aufnehmen der Informationen über ein zu bewertendes Objekt über die Ein-/Ausgabeeinrichtung, und Senden aufgenommener Information an eine zentrale Steuer- und Bewertungseinheit über die Sende-/Empfangseinrichtung.

Das Programm befähigt die mobile Erfassungseinheit weiterhin dazu, als Teil eines Bewertungssystems einen Bewertungsvorgang zur Bewertung des Zustands eines zu bewertenden Objekts zu initiieren, wie beispielsweise einer schweren Baumaschine.

## Patentansprüche

1. Bewertungssystem (1), mit
einer Mehrzahl mobiler Erfassungseinheiten (4),
einer zentralen Steuer- und Bewertungseinheit (2), und
einer Datenbank (3), in der Informationen zu Objekten gespeichert sind,
wobei eine mobile Erfassungseinheit (4)
einen Bewertungsvorgang zur Bewertung des Zustands eines zu bewertenden Objekts initiieren kann,
eine Ein-/Ausgabeeinrichtung (5) umfasst, die eingerichtet ist, Informationen über das zu bewertende Objekt abzufragen und aufzunehmen,
eine Steuereinrichtung (6) umfasst, die eingerichtet ist, ein Abfragen und ein Aufnehmen von Informationen mittels der Ein-/Ausgabeeinrichtung (5) in mehreren Schritten nach Vorgabe der zentralen Steuer- und Bewertungseinheit (2) zu steuern, und
eine Sende-/Empfangseinrichtung (7) umfasst, die eingerichtet ist, aufgenommene Informationen an die zentrale Steuer- und Bewertungseinheit (2) zu senden,
wobei die zentrale Steuer- und Bewertungseinheit (2) eingerichtet ist,
abhängig von den empfangenen Informationen und/oder den in der Datenbank (3) gespeicherten Information zu dem zu bewertenden Objekt abzufragende Informationen zu bestimmen und eine Vorgabe über abzufragende Informationen an die mobile Erfassungseinheit (4) zu senden,
nach Empfang aller hierzu erforderlichen Informationen auf Grundlage der aufgenommenen Informationen eine Bewertung des zu bewertenden Objekts durchzuführen,
das Ergebnis dieser Bewertung der mobilen Erfassungseinheit (4) zu übermitteln, und
die Bewertung und den Zustand für das Objekt in der Datenbank (3) abzulegen.

2. Bewertungssystem (1) nach Anspruch 1, wobei die zentrale Steuer- und Bewertungseinheit (2) im Rahmen eines Bewertungsvorgangs objektübergreifende Informationen aus der Datenbank (3) bezieht.

3. Bewertungssystem (1) nach Anspruch 2, wobei die objektübergreifende Information Information aus zumindest einer der folgenden Klassen beinhaltet:
objekttypspezifische Marktfaktoren, unter welche die aktuelle Jahreszeit und/oder Saisonalität, generelle Markttendenzen (Trends), aktuelle und historische Anzahl zu dem zu bewertenden Objekt ähnlicher bereits in der Datenbank festgehaltener Objekte, sowie deren historische preisliche Entwicklung fällt;
objektübergreifende wirtschaftliche Faktoren, unter welche die (regionale) Inflationslage, die (regionale) Kaufkraft privater Abnehmer, relevante staatliche Investitionsabsichten, generelle Wechselkurse und Importkosten für Produkte fallen;
verkaufsortsbezogene Faktoren, unter welche Lagerfähigkeit, Lieferfähigkeit und etwaig anfallende Transportkosten mit Bezugnahme auf voraussichtliche Standorte potentieller Abnehmer fallen;
etwaige gesetzliche & Nachhaltigkeitsaspekte, unter welche Regulierungen und Zertifizierungen fallen.

4. Bewertungssystem (1) nach Anspruch 2 oder 3, wobei die zentrale Steuer- und Bewertungseinheit (2) die objektübergreifende Information dazu nutzt, um Informationsabfragen einzusparen oder auf einige wenige Antwortmöglichkeiten zu beschränken.

5. Bewertungssystem (1) nach einem der Ansprüche 1 bis 4, welches weiterhin über eine Kontrolleinheit (21) verfügt, welche Einfluss auf Bewertungsvorgänge nehmen kann, indem sie die Steuer- und Bewertungseinheit (2) dazu veranlasst, abzufragende Informationen zu bestimmen oder Bewertungen zu bereits aufgenommenen Informationen zu verändern, und wobei das Bewertungssystem (1)
in einem ersten Betriebsmodus betrieben werden kann, in welchem vor und/oder nach jeder Informationsabfrage über die zentrale Steuer- und Bewertungseinheit (2) mit der Kontrolleinheit (21) kommuniziert wird;
in einem weiteren Betriebsmodus betrieben werden kann, in welchem die zentrale Steuer- und Bewertungseinheit (2) vor jeder Informationsabfrage und/oder Bewertung eine Entscheidung darüber trifft, ob Kommunikation mit der Kontrolleinheit (21) aufgenommen wird; und/oder
in einem autonomen Betriebsmodus (3) betrieben werden kann, in welchem die zentrale Steuer- und Bewertungseinheit (2) nicht mit der Kontrolleinheit (21) kommuniziert.

6. Bewertungssystem (1) nach Anspruch 5, wobei die Kontrolleinheit (21) eine Schnittstelle zu einer geschulten Person oder zu einer Mehrzahl geschulter Personen darstellt; und wobei die
Kontrolleinheit (21) optional auch die Möglichkeit hat, einen abgeschlossenen Bewertungsvorgang wiederaufzunehmen, indem sie die zentrale Steuer- und Bewertungseinheit dazu veranlasst, weitere abzufragende Informationen zu bestimmen oder bereits aufgenommene Informationen neu zu bewerten.

7. Bewertungssystem (1) nach einem der Ansprüche 1 bis 6, wobei zu jedem in der Datenbank (3) verfügbaren Objekt (B) zumindest ein Zugangsschlüssel vorliegt, der es Nutzern, welche über ebendiesen Zugangsschlüssel verfügen, ermöglicht, auf die Bewertung und den erfassten Zustand des Objektes in der Datenbank (3) zuzugreifen oder einen Bewertungsvorgang zu dem Objekt zu initiieren; und wobei optional
die zentrale Steuer- und Bewertungseinheit im Rahmen des Bewertungsvorgangs eine Abfrage des Zugangsschlüssels vornehmen kann und bei Nichtbereitstellen des Zugangsschlüssels seitens der mobilen Erfassungseinheit (4) der Bewertungsvorgang abgebrochen wird; und/oder
der Zugangsschlüssel nur eine bestimmte Anzahl an Malen für den Zugriff auf die Datenbank (3) oder für das Initiieren eines Bewertungsvorgangs verwendet werden kann, bevor er verfällt.

8. Bewertungssystem (1) nach einem der Ansprüche 1 bis 7, welches weiterhin über eine Prüfungseinheit (41) verfügt, die zwei Zustände und Bewertungen eines Objekts (B) vergleicht und bestimmt, ob sich die Zustände signifikant unterscheiden, und auf Basis dieses Vergleichs entweder zu einem negativen oder einem positiven Ergebnis kommt, wobei optional
die Signifikanzgrenze für die Unterschiede zwischen zwei Zuständen eines Objekts, welche darüber entscheidet, ob die Prüfungseinheit (41) zu einem positiven oder einem negativen Ergebnis kommt, objektspezifisch ist.

9. Bewertungssystem (1) nach Anspruch 8, wobei die Datenbank (3) mit einer Verkaufsplattform verbunden ist, so dass der abgeschlossene Bewertungsvorgang in ein Verkaufsangebot auf der Handelsplattform mündet.

10. Verfahren zum Ausführen eines Bewertungsvorgangs eines zu bewertenden Objekts, der mit Hilfe einer mobilen Erfassungseinheit durchgeführt werden kann, wobei das Verfahren Folgendes umfasst:
Speichern von Informationen zu Objekten in einer Datenbank,
Initiieren des Bewertungsvorgangs zur Bewertung des Zustands des zu bewertenden Objekts mittels der mobilen Erfassungseinheit,
Abfragen und Aufnehmen von Informationen über das zu bewertende Objekt mittels der mobilen Erfassungseinheit,
Senden aufgenommener Informationen über das zu bewertende Objekt an eine zentrale Steuer- und Bewertungseinheit,
Bestimmen abzufragender Informationen durch die zentrale Steuer- und Bewertungseinheit abhängig von den an der zentralen Steuer- und Bewertungseinheit empfangenen Informationen und/oder den in der Datenbank gespeicherten Informationen zu dem zu bewertenden Objekt und Senden einer Vorgabe über die weiter abzufragenden Informationen an die mobile Erfassungseinheit,
Steuern des Abfragens und des Aufnehmens von Informationen in mehreren Schritten nach der Vorgabe der zentralen Steuer- und Bewertungseinheit,
Durchführen einer Bewertung des zu bewertenden Objekts auf der Grundlage der abgefragten Informationen nach Empfangen aller hierfür erforderlichen Informationen an der zentralen Steuer- und Bewertungseinheit,
Senden des Ergebnisses dieser Bewertung an die mobile Erfassungseinheit, und
Ablegen von Bewertungen und Informationen zu allen bewerteten Objekten in der Datenbank.

11. Verfahren zum Ausführen eines Bewertungsvorganges nach Anspruch 10, wobei das Ablegen in Abhängigkeit einer mittels der mobilen Erfassungseinheit bereitgestellten Information stattfindet, indem
vor einem möglichen Ablegen ein Erfragen an die mobile Erfassungseinheit stattfindet, ob das Ablegen des Ergebnisses eines Bewertungsvorgangs vorgenommen werden soll.

12. Ein Transaktionsverfahren zur Abwicklung einer Transaktion eines Objekts, welches mithilfe eines Bewertungssystems nach Anspruch 9 realisiert wird, wobei das Transaktionsverfahren folgendes umfasst:
Erstes Bewerten des Objekts durch das Bewertungssystem,
Wechsel eines Besitzers des Objekts,
Zweites Bewerten des Objekts durch das Bewertungssystem,
Prüfung der Ähnlichkeit der zwei Bewertungen durch eine Prüfungseinheit,
Abschließen der Transaktion, wenn das Prüfungsergebnis positiv ausfällt.

13. Mobile Erfassungseinheit (4) für ein Bewertungssystem nach einem der Ansprüche 1 bis 9, die
einen Bewertungsvorgang zur Bewertung des Zustands eines zu bewertenden Objekts initiieren kann,
eine Ein-/Ausgabeeinrichtung (5) umfasst, die dazu eingerichtet ist, um Informationen über das zu bewertende Objekt abzufragen und aufzunehmen,
eine Sende-/Empfangseinrichtung (7) umfasst, die dazu eingerichtet ist, um aufgenommene Informationen an eine zentrale Steuer- und Bewertungseinheit (2) zu senden und eine Vorgabe der zentralen Steuer- und Bewertungseinheit für ein Abfragen und ein Aufnehmen von Informationen zu empfangen, und
eine Steuereinrichtung (6) umfasst, die dazu eingerichtet ist, um ein Abfragen und ein Aufnehmen von Informationen mittels der Ein-/Ausgabeeinrichtung (5) in mehreren Schritten nach der Vorgabe der zentralen Steuer- und Bewertungseinheit (2) zu steuern.

14. Mobile Erfassungseinheit (4) für ein Bewertungssystem nach Anspruch 13, wobei die mobile Erfassungseinheit (4) einen Link empfangen kann, und ein Betätigen des Links
das Bewertungssystem (1) dazu veranlasst, einen Bewertungsvorgang zu initiieren, und/oder
die mobile Erfassungseinheit dazu veranlasst, einen Erfassungsvorgang durchzuführen, wobei der Erfassungsvorgang folgendes umfasst:
Empfangen einer Vorgabe über abzufragende Informationen über die Sende-/Empfangseinrichtung (7),
Abfragen und Aufnehmen der Informationen über ein zu bewertendes Objekt über die Ein-/Ausgabeeinrichtung (5),
Senden aufgenommener Information an eine zentrale Steuer- und Bewertungseinheit (2) über die Sende-/Empfangseinrichtung.

15. Ein Programm für eine mobile Erfassungseinheit (4) nach Anspruch 13 oder 14, welches die mobile Erfassungseinheit dazu befähigt, einen Erfassungsvorgang durchzuführen, wobei der Erfassungsvorgang folgendes umfasst:
Empfangen einer Vorgabe über abzufragende Informationen über die Sende-/Empfangseinrichtung (7),
Abfragen und Aufnehmen der Informationen über ein zu bewertendes Objekt über die Ein-/Ausgabeeinrichtung (5),
Senden aufgenommener Information an eine zentrale Steuer- und Bewertungseinheit (2) über die Sende-/Empfangseinrichtung zumindest einen der folgenden Vorgänge durchzuführen; und welches die mobile Erfassungseinheit (4) weiterhin dazu befähigt,
als Teil eines Bewertungssystems nach Anspruch 1 bis 9 einen Bewertungsvorgang zur Bewertung des Zustands eines zu bewertenden Objekts zu initiieren.
